# EUROPÄISCHE PATENTSCHRIFT

(11) **EP 3 017 734 B1**
(45) Veröffentlichungstag und Bekanntmachung des Hinweises auf die Patenterteilung: **26.12.2018**
(21) Anmeldenummer: 15192742.3
(22) Anmeldetag: 03.11.2015
(51) Int. Cl.: A47J 31/44

(54) **GETRÄNKEZUBEREITUNGSVORRICHTUNG FÜR PORTIONSEINHEITEN SOWIE BETRIEBSVERFAHREN**
BEVERAGE PREPARATION DEVICE FOR PORTION UNITS AND METHOD OF OPERATION
DISPOSITIF DE PRÉPARATION DE BOISSONS POUR PORTIONS ET PROCÉDÉ DE FONCTIONNEMENT

(30) Priorität: 04.11.2014 DE 102014116081
(43) Veröffentlichungstag der Anmeldung: 11.05.2016
(73) Patentinhaber: Eugster/Frismag AG, 8580 Amriswil (CH)
(72) Erfinder: WILDHABER, Michael, Henau (CH)
(74) Vertreter: Patentanwälte Behrmann Wagner PartG mbB

(56) Entgegenhaltungen:
- WO-A1-2011/141532
- CH-A1- 707 374
- FR-A1- 2 625 348
- FR-A1- 2 874 164

## Beschreibung

Die Erfindung betrifft ein Verfahren gemäß dem Oberbegriff des Anspruchs 1 zum Betreiben einer, zum Zubereiten von Getränkemittelportionseinheiten, insbesondere Kapseln, bevorzugt Kaffeekapseln, ausgebildeten Getränkezubereitungsvorrichtung, wobei mittels eines optischen Farbsensors, insbesondere eines RGB-Sensors, von einer Portionseinheit ein erstes, insbesondere mehrdimensionales, Farbsignal zur Identifikation eines Portionseinheitentyps erzeugt wird, wobei nach einer erfolgten Identifikation des Portionseinheitentyps auf Basis des Farbsignals, insbesondere einer auf Basis des Farbsignals generierten digitalen Farbinformation, von einer Steuerung (der Getränkezubereitungsvorrichtung) ein portionseinheitentypspezifisches Programm zum Betrieb der Getränkezubereitungsvorrichtung ausgewählt und ausgeführt wird. Ferner betrifft die Erfindung eine zum Zubereiten von Getränken mittels Portionseinheiten, insbesondere Kapseln, bevorzugt Kaffeekapseln, ausgebildete Getränkezubereitungsvorrichtung gemäß dem Oberbegriff des Anspruchs 5. Darüber hinaus betrifft die Erfindung ein System umfassend eine derartige Getränkezubereitungsvorrichtung sowie mindestens zwei Portionseinheiten unterschiedlichen Typs.

Aus der EP 1 974 638 A1 sowie der EP 2 266 446 A1 ist eine Getränkezubereitungsvorrichtung mit einer Farberkennungseinrichtung bekannt, die dazu eingerichtet ist, die Farbcodierung einer mit einer Farbcodierung versehenen, in einen Kapselhalter eingesetzten Portionskapsel zu erfassen und ein dem identifizierten Kapseltyp zugeordnetes (typspezifisches) Programm zum Betrieb der Getränkezubereitungsvorrichtung auszuwählen und auszuführen.

Zum Betreiben der aus den vorgenannten Druckschriften bekannten Getränkezubereitungsvorrichtungen ist es notwendig, eine Portionskapsel in einen Kapselhalter einzusetzen, also fest relativ zu dem Farbsensor zu positionieren, damit dieser eine dezidierte, an einer bestimmten Position befindliche Farbcodierung erfassen kann.

In der EP 2 227 120 B1 ist ein Verfahren zum Betreiben einer Getränkezubereitungsvorrichtung beschrieben, welches darauf abstellt, mindestens zwei unterschiedliche Farben einer Portionskapsel zu erkennen und einen Portionskapseltyp anhand der ermittelten Farbkombination zu identifizieren. Im Rahmen der Ausführung des Programms ist es also notwendig zwei dezidierte, jeweils identifizierbare bzw. erfassbare, positionsgenaue Farbcodierungen auf einer Portionskapsel vorzusehen und zudem die Portionskapsel zum Zwecke der Farberfassung in einen Kapselhalter einzusetzen und die Portionskapsel hierdurch fest relativ zu einem oder mehreren optischen Farbsensoren zu positionieren.

Aus der WO 2013/042016 A1 ist eine Getränkezubereitungsvorrichtung mit einem Bewegungssensor bekannt, mit welchem detektierbar ist, ob ein Gegenstand (etwas) sich einem Einwurfabschnitt der Getränkezubereitungsvorrichtung für Getränkekapseln (Portionskapseln) nähert. Als Sensor wird beispielsweise eine Photodiode, ein Phototransistor oder ein Photoresistor, oder alternativ ein Infrarotsensor eingesetzt, der sensitiv ist gegenüber einer Veränderung eines Lichteinfalls. Mit anderen Worten wird mittels des Sensors lediglich eine Bewegung eines Gegenstandes erfasst.

Aus der CH 707 374 A1 ist eine Getränkezubereitungsvorrichtung zur Herstellung von Getränken mittels Kapseln bekannt, die einen Einwurfschacht für Kapseln aufweist, an welchem ein Lesegerät in Form einer Miniatur-Reflexlichtschranke, eines IR-Sensors oder eines induktiven Sensors zum Erfassen eines Kapselcodes angeordnet ist, um in dessen Abhängigkeit Betriebsparameter der Getränkezubereitungsvorrichtung zu steuern. Gemäß der Lehre der Druckschrift ist der Code in Form von konzentrischen Kreisen realisiert. Der maschinenlesbare Code soll mittels der Leseeinrichtung mindestens einmal eingelesen werden, bis die Kapsel schwerkraftbedingt eine Zwischenstellung zwischen Kammerteilen der Brühkammer in der Offenstellung erreicht. Der Lesevorgang erfolgt gemäß der Lehre der Druckschrift bevorzugt in zwei Sequenzen spiegelbildlich, so dass auch teilweise verschmutzte Kapseln noch erkannt werden können. Gemäß einer beschriebenen Ausführungsform kann das Lesegerät die beiden Sequenzen durch einen Unterbruch im Zentrum voneinander unterscheiden, so dass die zweite Sequenz nur noch der Bestätigung der ersten Sequenz dient. Auch ist es möglich, eine Steuervorrichtung so zu programmieren, dass die Erkennung des Codes erst erfolgt, wenn beide Sequenzen durchlaufen bzw. als identischer Code identifiziert wurden.

Aus der DE 100 41 847 A1 ist allgemein ein Aufnahmesensor mit einer Vielzahl von lichtempfindlichen Zellen bekannt.

Aus der WO 2011/141532 A1 ist eine auf dem Zentrifugalprinzip beruhende Getränkezubereitungsvorrichtung bekannt, bei welcher eine deckelseitig einen eindeutigen Identifikationscode tragende Kapsel relativ zu einem Farbsensor rotiert wird. Dieser erzeugt ein einziges Farbsignal, welches sicher eine Zuordnung der Kapsel zu einem bestimmten Kapseltyp ermöglicht.

Zum weiteren Stand der Technik werden die FR 2 874 164 A1 und die FR 2 625 348 A1 genannt.

Ausgehend von dem vorgenannten Stand der Technik liegt der Erfindung die Aufgabe zugrunde, ein beschleunigtes Verfahren zum Betreiben einer zum Zubereiten von Getränken mittels Portionseinheiten eingerichteten (ausgebildeten) Getränkezubereitungsvorrichtung sowie eine entsprechend verbesserte Getränkezubereitungsvorrichtung anzugeben, wobei insbesondere die Identifikation eines Portionseinheitentyps schnell und zuverlässig durchführbar sein soll. Besonders bevorzugt ist es, wenn auf dezidierte, positionsgenaue Farbcodierungen, wie Farbringe oder Farbpunkte verzichtet werden kann, da diese das ästhetische Empfinden eines Kunden beim Betrachten der Kaffeekapsel negativ beeinflussen.

Diese Aufgabe wird hinsichtlich des Verfahrens mit den Merkmalen des Anspruchs 1 gelöst. Hinsichtlich der Getränkezubereitungsvorrichtung wird die Aufgabe mit den Merkmalen des Anspruchs 5 gelöst, wobei die Identifikationsmittel ausgebildet und eingerichtet sind, das erste Farbsignal während einer Bewegung der Portionseinheit relativ zu dem Farbsensor zu erfassen. Besonders bevorzugt handelt es sich bei dem ersten Farbsignal um ein mehrdimensionales Signal, insbesondere ein RGB-Signal oder ein sonstiges, einen Punkt in einem Farbraum kennzeichnendes Signal, beispielsweise ein HSV Signal (Farbton, Sättigung, Helligkeit).

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, in Abkehr von dem bekannten Stand der Technik zu Zwecken der Identifikation eines Portionseinheitentyps aus mehreren möglichen, unterschiedlichen Portionseinheitentypen ein, insbesondere mehrdimensionales, Farbsignal während einer Relativbewegung der Portionseinheit zu mindestens einem, vorzugsweise ausschließlich einem, optischen Farbsensor, insbesondere einem RGB-Sensor zu erfassen, wobei erfindungsgemäß vorgesehen ist, mittels des optischen Farbsensors nicht nur ein einziges Farbsignal von der Portionseinheit, sondern mehrere Farbsignale nacheinander, und zwar noch während der Relativbewegung der Portionseinheit relativ zu dem optischen Farbsensor zu erzeugen, um dann auf Basis der mehreren Farbsignale ein einziges End-, bzw. Gesamt-, bzw. Mischfarbsignal zu generieren, um auf diese Weise die Auswertesicherheit bzw. Identifikationssicherheit zu erhöhen. Die Identifikation erfolgt dann anhand dieses einzigen resultierenden Farbsignals bzw. Farbinformation. Wesentlich ist jedoch zunächst, dass der optische Farbsensor mindestens ein, bevorzugt mehrdimensionales, Farbsignal von der Portionseinheit erzeugt, während die Portionseinheit an dem ortsfest angeordneten optischen Farbsensor vorbei (genauer durch einen Erfassungsbereich des Farbsensors hindurch) bewegt wird, insbesondere indem die Portionseinheit entlang eines Einwurfschachtes fällt, der bevorzugt während der Relativbewegung dafür Sorge trägt, dass die Portionseinheit in einem definierten Abstand entlang des Farbsensors bewegt wird.

Im Rahmen eines nach dem Konzept der Erfindung ausgebildeten Verfahrens bzw. dem Rahmen einer nach dem Konzept der Erfindung ausgebildeten Getränkezubereitungsvorrichtung ist es also nicht mehr notwendig, dass die Portionseinheit einen fest positionierten Kapselhalter erreicht, bevor ein Farbsignal erfasst wird, sondern es wird erfindungsgemäß bereits die Zeit zum Erfassen/Erzeugen des Farbsignals durch Betrachtung/Analyse der Portionseinheitsoberfläche mittels des ersten Farbsensors genutzt, die die Portionseinheit benötigt, um eine bestimmte Position in der Getränkezubereitungsvorrichtung, insbesondere vor oder in einer Brüheinheit zu erreichen, wodurch insgesamt die Identifikation des Portionseinheitentyps beschleunigt wird. Mit anderen Worten kann aufgrund einer schnelleren Identifikation des Portionseinheitentyps das portionseinheitentypspezifische Programm in einer Steuerung der Getränkezubereitungsvorrichtung schneller ausgewählt und ausgeführt werden, als dies im Stand der Technik möglich ist.

Das erfindungsgemäße Verfahren und die erfindungsgemäße Getränkezubereitungsvorrichtung sind nicht auf den Einsatz von Kaffeeportionseinheiten bzw. die Herstellung von Kaffee beschränkt. Anstelle von Kaffeekapseln können auch davon unterschiedliche Getränkesubstratportionseinheiten, wiederum nicht beschränkt auf Kapseln eingesetzt werden. So ist es beispielsweise möglich Bier-Portionseinheiten, insbesondere Bierkapseln zur Herstellung von Bier oder Kaltgetränke-Portionseinheiten, insbesondere Kaltgetränkekapseln zur Herstellung von Kaltgetränken wie Fruchtsäften und dgl. Getränke einzusetzen. Auch ist es möglich, Tee-Portionseinheiten zur Herstellung von Tee im Rahmen des erfindungsgemäßen Verfahrens und der Vorrichtung einzusetzen. Zudem können weitere alternative Getränkesubstratportionseinheiten, die sich insbesondere durch die Wahl des beinhalteten Getränkesubstrates voneinander unterscheiden, eingesetzt werden.

Im Rahmen der Erfindung bedeutet die Formulierung des Erzeugens eines Farbsignals von der Portionseinheit, dass der Farbsensor die Portionseinheit betrachtet bzw. ein vom Sensor betrachteter bzw. in einem Erkennungsbereich befindlicher Flächenabschnitt der Portionseinheit ursächlich für das Farbsignal ist.

Ein weiterer wesentlicher Vorteil des erfindungsgemäßen Verfahrens und der erfindungsgemäßen Getränkezubereitungsvorrichtung besteht darin, dass die Portionseinheiten nicht wie im Stand der Technik mit dezidierten bzw. fest positionierten und damit auffälligen bzw. das Gesamtdesign der Portionseinheit störenden Farbcodierungen, wie farbigen Ringen oder farbigen Punkten versehen sein müssen; das erfindungsgemäße Verfahren und die erfindungsgemäße Getränkezubereitungsvorrichtung ermöglichen es vielmehr, dass die Portionseinheit, insbesondere ein Deckel einer Kapsel, mit einem durchgängigen, ästhetisch wirkenden Muster bzw. Gesamtbild versehen wird, das neben der ästhetischen Wirkung eben auch eine Identifikationsfunktion hat, da sich die Muster unterschiedlicher Portionseinheiten hinsichtlich ihres Farbeindrucks bzw. hinsichtlich der mehrdimensionalen Farbsignale, die von dem Muster mittels des optischen Farbsensors erfassbar sind, unterscheiden. So ist es beispielsweise denkbar und bevorzugt, dass das Muster in Form eines sich wiederholenden Schriftzuges auf einem Hintergrund ausgebildet ist, wobei sich der Schriftzug bevorzugt in Zeilen oder Spalten wiederholt. Bevorzugt handelt es sich bei dem Schriftzug um eine Portionseinheitenmarke. Das Muster ist bevorzugt so auszubilden, dass das Farbsignal unabhängig davon, von welcher Stelle, bzw. welcher Position (Flächenabschnitt) des Musters es mittels des Farbsensors erzeugt wird näherungsweise gleich ist - d.h. die Farbanteile des Musters sollten über die Flächenerstreckung des Musters relativ gleich verteilt sein. Auch ist es möglich, anstelle oder zusätzlich zu einem sich wiederholenden Schriftzug, insbesondere farbige, Bilder, bevorzugt als Deckelgestaltung zur Identifikation eines Portionseinheitentyps auf der Portionseinheit. Besonders bevorzugt ist es dabei, wenn sich ein entsprechendes Bild über den Großteil eines Portionseinheitenabschnitts, beispielsweise eines Deckelabschnitts einer Portionskapsel erstreckt und somit die Basis für die Erzeugung einer digitalen Farbinformation im Rahmen des erfindungsgemäßen Verfahrens bzw. bei Anwendung einer erfindungsgemäßen Getränkezubereitungsvorrichtung bildet.

Für den Fall der Wahl eines sich wiederholenden Schriftzuges und/oder einer Zahlenfolge kann der Schriftzug in schwarz oder weiß auf einem farbigen Hintergrund ausgestaltet sein. Es ist auch denkbar, einen farbigen Schriftzug und/oder Zahlenfolge auf einem schwarzen oder weißen Hintergrund zu sehen oder Hintergrund und Schriftzug unterschiedlich farbig auszugestalten.

Zusammenfassend ermöglichen das vorgeschlagene Verfahren sowie die vorgeschlagene Getränkezubereitungsvorrichtung also eine schnellere und, insbesondere im Falle des Erfassens mehrerer Farbsignale zur Ermittlung eines resultierenden, mehrdimensionalen End- bzw. Gesamtfarbwertes eine besonders sichere Portionseinheitentypenidentifikation. Zudem ermöglichen das Verfahren und die Vorrichtung eine völlig neue Portionseinheitengestaltung, die ohne dezidierte, positionsfeste Farbcodierungen, insbesondere in Form von Ringen oder Punkten auskommt.

Bei dem von dem optischen Farbsensor während der Relativbewegung von der Portionseinheit erzeugten Farbsignal, insbesondere bei sämtlichen von dem mindestens einen, vorzugsweise ausschließlich einen, optischen Farbsensor erzeugten Farbsignalen handelt es sich, wie bereits erwähnt, bevorzugt um (jeweils) ein mehrdimensionales, bevorzugt zunächst analoges, Signal, welches bevorzugt aus mehreren elektrischen Spannungssignalen, beispielsweise für die Grundfarben rot, grün und blau besteht. Dieses mehrdimensionale analoge Farbsignal wird dann, bevorzugt noch mittels eines entsprechend ausgestalteten optischen Farbsensors, insbesondere eines RGB-Sensors, oder alternativ von einem von dem Farbsensor separaten Analog-Digital-Wandler in eine, vorzugsweise mehrdimensionale, d.h. aus mehreren Digitalwerten bestehende bzw. zusammengesetzte Farbinformation umgewandelt, insbesondere indem jeder elektrischen Spannung des bevorzugt zunächst analogen Signals ein digitaler Wert zugeordnet wird. Die digitale Farbinformation kennzeichnet dabei einen Punkt in einem, vorzugsweise dreidimensionalen, Farbraum, wobei der Farbraum in der Steuerung vorzugsweise in Teilräume unterteilt ist und der jeweilige Teilraum, indem sich eine digitale Farbinformation (Raumkoordinate) befindet den jeweiligen Portionseinheitentyp definiert. Bei der Farbinformation,die zur Identifikation des Portionseinheitentyp unmittelbar benutzt wird, kann es sich in einer einfachsten Ausführungsform um die aus einem einzigen, bevorzugt analogen, Farbsignal ermittelte digitale Farbinformation handeln - bevorzugt handelt es sich jedoch um eine gemittelte Farbinformation, die auf mehrere, gleichzeitig oder nacheinander erfasste Farbsignale zurückgeht.

Grundsätzlich ist es möglich, die digitale Farbinformation zu kodieren, insbesondere mit einer Verschlüsselung zu versehen und/oder mit einem Algorithmus umzuwandeln, damit das digitale Signal bzw. die Farbinformation im Rahmen der digitalen Datenverarbeitung nicht als einfache RGB-Information oder sonstige Farbsensorinformation erkannt wird.

Grundsätzlich ist möglich, dass, für den Fall des Vorsehens mehrerer optischer Sensoren, mehrere Farbsignale gleichzeitig zu erzeugen und zur Ermittlung eines Misch- bzw. Gesamtfarbwertes heranzuziehen - aus Kostengründen ist das Erfassen mehrerer Farbsignale mittels eines einzigen Farbsensors nacheinander jedoch bevorzugt.

Im Hinblick auf die konkrete Ausbildung des mindestens einen, vorzugsweise ausschließlich einen, optischen Farbsensors, gibt es unterschiedliche Möglichkeiten. Aus Kosten- und Geschwindigkeitsgründen ist es bevorzugt einen RGB-Sensor einzusetzen, der für jede der Grundfarben rot grün und blau bevorzugt, jeweils mindestens einen Sensorabschnitt aufweist. Durch die bevorzugte Verwendung eines RGB-Sensors als erster Farbsensor reicht zur Auswertung ein einfacher Mikrocontroller mit 8Bit oder 32Bit aus. Bevorzugt weist der RGB-Sensor mehrere RGB-Untereinheiten auf, also mehrere dreier-Kombinationen von Teilsensorflächen für die jeweilige Grundfarbe, wobei bevorzugt die Anzahl der dreier-Kombinationen die Zahl 20 nicht überschreitet, um somit eine schnelle Datenverarbeitung zu ermöglichen. Grundsätzlich ist es auch denkbar, als optischen Farbsensor eine Digitalkamera vorzusehen, wobei dies mit einem erheblichen Rechen- und damit Kostenaufwand für die Elektronik verbunden wäre.

Wie bereits erläutert, ist bei dem erfindungsgemäßen Verfahren und der erfindungsgemäßen Vorrichtung vorgesehen, wenn zusätzlich zu dem ersten, insbesondere mehrdimensionalen Farbsignals gleichzeitig oder alternativ während der Relativbewegung mindestens ein zweites, bevorzugt mehrdimensionales Farbsignal von der Portionseinheit erzeugt wird, vorzugsweise von einem abschnittsweise unterschiedlichen Flächenabschnitt der Portionseinheit, insbesondere eines Deckels, als der dem ersten Farbsignal zugrundeliegenden Flächenabschnitt. Mit anderen Worten überlappen sich unterschiedliche Flächenabschnitte bevorzugt nur teilweise oder überhaupt nicht. Für eine gleichzeitige Erfassung von zwei Farbsignalen bedarf es mehrerer optischer Farbsensoren, die gleichzeitig oder alternativ auch versetzt ein Farbsignal von der Portionseinheit erzeugen können. Bevorzugt ist jedoch eine alternative Ausgestaltungsform, wobei mit einem gemeinsamen (insbesondere einzigen) optischen Farbsensor nacheinander noch während der Relativbewegung und damit zumindest teilweise von unterschiedlichen Flächenabschnitten mehrdimensionale Farbsignale erzeugt werden.

Unabhängig von der Art der Erfassung der Farbsignale (gleichzeitig oder nacheinander) ist es bevorzugt, wenn die mehreren Farbsignale zur Identifikation des Portionseinheitentyps genutzt werden, indem aus den mehreren Signalen eine resultierende digitale, vorzugsweise mehrdimensionale Farbinformation (Gesamtfarbe, Mischfarbe, Endfarbe) ermittelt wird, welche dann einen Farbraumpunkt definiert, welchem wiederum ein Portionseinheitentyp charakterisierender Farbteilraum zugeordnet ist. Je nach dem, in welchem Farbteilraum der Farbraumpunkt angeordnet ist, erkennt (identifiziert) die Steuerung den einen oder anderen Portionseinheitentyp.

Wie bereits erläutert ist es möglich und bevorzugt, mehrere Farbsignale mit dem selben Farbsensor nacheinander zu erfassen, wobei für den Fall der gleichzeitigen Erfassung von Farbsignalen, insbesondere von unterschiedlichen Flächenabschnitten der, bevorzugt bewegten Portionseinheit mindestens ein zweiter Farbsensor fakultativ vorgesehen sein kann.

Wie ebenfalls bereits angedeutet, ist erfindungsgemäß vorgesehen, dass der Flächenbereich, dem das zweite Farbsignal zugeordnet ist zumindest teilweise unterschiedlich ist von einem Flächenbereich, der dem ersten Farbsignal zugeordnet ist - die Flächenabschnitte können sich dabei abschnittsweise überlappen oder alternativ und bevorzugt vollständig nebeneinander, insbesondere beabstandet voneinander angeordnet sein.

Zum Erzeugen mehrerer Farbsignale hintereinander muss die Relativbewegungsgeschwindigkeit der Portionseinheit relativ zu dem Sensor so auf die Sensorgröße und die Verarbeitungsgeschwindigkeit des Farbsensors abgestimmt sein, dass sich die Portionseinheit während mehrerer Erfassungen bzw. Farbsignalerzeugungen in einem Detektionsbereich (Erfassungsbereich) des Farbsensors befindet.

Für den erfindungsgemäßen Fall der Erzeugung von mindestens zwei Farbsignalen fließen diese, wie bereits eingangs angedeutet, bevorzugt in die Ermittlung eines gemeinsamen bzw. End- bzw. Mischsignals ein, wobei hierzu bevorzugt von aus den zunächst analogen Farbsignalen resultierenden Digitalwerten eine Mittelwertbildung durchgeführt wird.

Die Erfindung führt auch auf eine zum Zubereiten von Getränken mittels Portionseinheiten ausgebildete Getränkezubereitungsvorrichtung. Bevorzugt handelt es sich um eine Kaffeezubereitungsvorrichtung zum Brühen von Kaffeegetränken auf Basis von Getränkekapseln. Die Getränkezubereitungsvorrichtung umfasst eine Druckwassereinrichtung, insbesondere eine Förderpumpe zur Druckerhöhung und ggf. und bevorzugt Heizmittel zum Erhitzen von Wasser und/oder Milch und/oder sonstigen Flüssigkeiten für die Getränkezubereitungseinrichtung. Die Getränkezubereitungsvorrichtung umfasst ferner eine Brüheinheit zum eigentlichen Zubereiten der Getränke, im einfachsten Fall eine Mischkammer zum Mischen eines in der Portionseinheit beinhalteten Substrates mit einer Flüssigkeit, insbesondere Wasser, wobei die Brüheinheit bevorzugt zum Auslaugen eines Substrates, insbesondere eines Kaffeepulvers ausgebildet ist. Darüber hinaus umfasst die Getränkezubereitungsvorrichtung Identifikationsmittel zum Identifizieren eines Portionseinheitentyps auf Basis eines Farbsignals, wobei bevorzugt zunächst ein mehrdimensionales, bevorzugt analoges, Farbsignal, in digitale Farbwerte (Farbkoordinate) umgewandelt wird und der Portionseinheitentyp anhand eines solchen Wertes bzw. Koordinate oder anhand eines sich aus mehreren Werten bzw. Koordinaten ergebender Endwert oder Gesamtkoordinate identifiziert wird, wobei dann von einer Steuerung der Getränkezubereitungsvorrichtung ein portionseinheitenspezifisches Programm zum Betreiben der Getränkezubereitungsvorrichtung ausgewählt und ausgeführt wird. Erfindungsgemäß ist nun vorgesehen, dass die Identifikationsmittel so ausgebildet und eingerichtet sind, dass erste Farbsignale während einer Bewegung der Portionseinheit relativ zu dem Farbsensor zu erzeugen. Dies bedeutet, dass die Identifikationsmittel so ausgebildet sind, dass mit diesen bei einer Relativbewegung die Portionseinheit zum Farbsensor auf Basis eines Portionseinheitenabschnittes ein Farbsignal mittels des optischen Farbsensors erzeugt wird und auf dieser Basis, insbesondere unter Berücksichtigung weiterer Farbmessungen bzw. Farbsignalen, ein Portionseinheitentyp identifiziert wird bzw. identifizierbar ist.

Besonders bevorzugt ist es, wenn die Getränkezubereitungsvorrichtung einen Schacht aufweist, in welchem die Portionseinheit entlang des dann feststehend angeordneten ersten Farbsensors zur Realisierung der Relativbewegung schwerkraftbedingt vorbeifallen kann. Mit anderen Worten befindet sich ein Detektionsbereich des ersten Farbsensors in einer Fallstrecke entlang eines Schachtes, wobei der Schacht bevorzugt einen definierten Abstand bzw. Abstandsbereich der Portionseinheit relativ zum Sensor bei der Relativbewegung sicherstellt. Darüber hinaus kommt dem Schacht eine Abdunklungsfunktion zu, um Fremdlichteinflüsse zu minimieren.

Es ist ganz besonders bevorzugt, wenn die Portionseinheit während ihrer Relativbewegung definiert belichtet wird. Bevorzugt sind hierzu entsprechende Beleuchtungsmittel vorgesehen, vorzugsweise in einem fakultativen, vorerwähnten Schacht. Bevorzugt wird als Lichtquelle eine Lichtquelle mit ausreichend breitem Lichtspektrum eingesetzt, um die mittels des Sensors detektierten Grundfarben abzudecken. Als besonders vorteilhaft hat es sich dabei herausgestellt, eine weiße LED als Lichtquelle (mit ausreichend breitem Lichtspektrum) einzusetzen, wobei auch alternative Lichtquellen vorgesehen werden können.

Ganz besonders bevorzugt ist es, wenn der erste Farbsensor und/oder mindestens ein fakultativer weiterer (zweiter) Farbsensor getriggert wird von einem Sensor, mit dem detektierbar ist, dass sich eine Portionseinheit auf dem Weg in Richtung Farbsensor befindet. Beispielsweise kann es sich bei dem Sensor um eine aktive Lichtschranke oder eine Reflektionslichtschranke handeln oder um eine andere Art von Bewegungssensor, beispielsweise ein Infrarotsensor.

Schlussendlich führt die Erfindung noch auf ein System, umfassend einem nach dem Konzept der Erfindung ausgebildete Getränkezubereitungsvorrichtung sowie mindestens zwei, jeweils eine Getränkesubstanz beinhaltende Portionseinheiten unterschiedlichen Typs, wobei sich die Portionseinheiten unterschiedlichen Typs bevorzugt hinsichtlich ihres Inhaltstoffes und/oder ihrer Inhaltsmenge unterscheiden. Die Portionseinheiten unterschiedlichen Typs unterscheiden sich hinsichtlich ihrer Farbgebung bevorzugt hinsichtlich ihrer Bemusterung einer Deckelfläche. Jedenfalls unterscheiden sich die Portionseinheitstypen darin, dass von dem ersten Farbsensor der Getränkezubereitungsvorrichtung unterschiedliche Farbsensorsignale resultieren, wenn die unterschiedlichen Typen von Portionseinheiten im Erfassungsbereich des Sensors aufgenommen bzw. mittels des Sensors analysiert werden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine stark schematisierte Darstellung einer Getränkezubereitungsvorrichtung mit einem optischen Farbsensor umfassenden Identifikationsmittel zur Identifikation eines Portionseinheitentyps, hier eines Getränkekapseltyps,
- Fig. 2: die Draufsicht auf einen Deckel einer als Kapsel ausgebildeten Portionseinheit mit eingezeichneten Erfassungsbereichen, von denen jeweils ein mehrdimensionales Farbsignal während einer Relativbewegung der Portionseinheit relativ zu einem Farbsensor erzeugbar ist, und
- Fig. 3: ein in einer schematischen Darstellung einen möglichen Ablauf zum Generieren eines Misch- bzw. Endfarbwertes zur Portionseinheitentypidentifikation.

In den Figuren sind gleiche Elemente und Elemente mit der gleichen Funktion mit den gleichen Bezugszeichen gekennzeichnet.

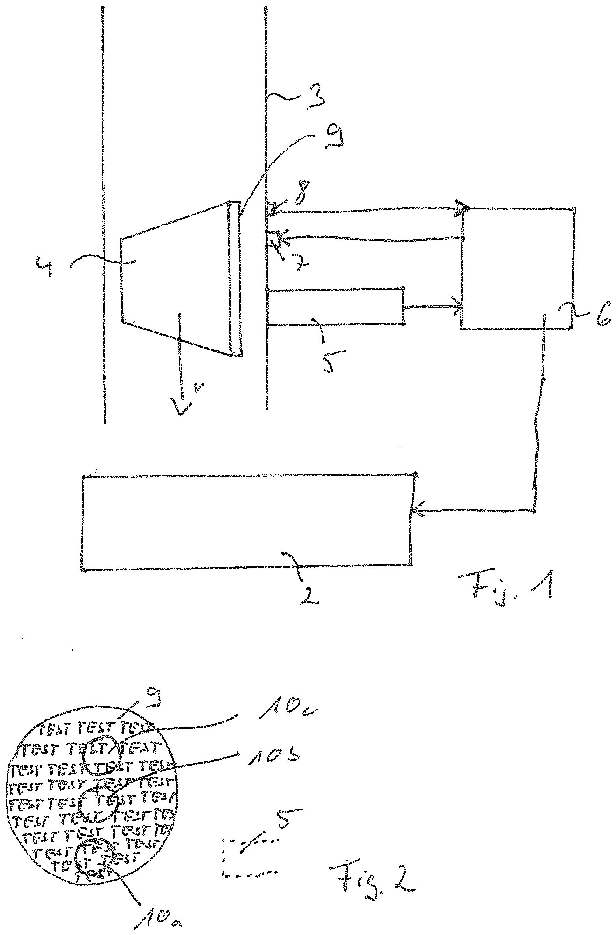

In Fig. 1 ist eine Getränkezubereitungsvorrichtung 1 gezeigt. Diese umfasst als Blackbox 2 dargestellte Funktionseinheiten, wie insbesondere eine Druckwassereinrichtung, eine Heizeinheit zum Erhitzen von Wasser sowie eine Brüheinheit.

Die Getränkezubereitungsvorrichtung 1 umfasst zudem einen Schacht 3, in den Portionseinheiten 4, beinhaltend ein Substrat zur Herstellung von Getränken, insbesondere zum Brühen von Kaffeegetränken, eingeworfen werden können. Die Portionseinheiten 4 fallen schwerkraftbedingt mit einer Geschwindigkeit v von hier beispielsweise 1,5 m/s entlang eines ersten optischen Farbsensors 5, genauer durch einen Erfassungsbereich dieses Farbsensors 5. Der Farbsensor 5 ist signalleitend mit einer Steuerung 6 verbunden. In dem Schacht sind ferner Beleuchtungsmittel 7, insbesondere in Form einer weißen LED zum definierten Beleuchten des Erfassungsbereichs des ersten Farbsensors 5 vorgesehen und zudem fakultativ ein Bewegungssensor 8 in Form einer Reflektionslichtschranke zum Triggern des ersten Farbsensors 5.

Vom Bewegungssensor 8 wird durch die Reflektion des Lichtes der Beleuchtungsmittel 7 eine sich bewegende Portionseinheit 4 erkannt und der erste Farbsensor 5 wird entsprechend über die Steuerung 6 getriggert. Von dem ersten Farbsensor 5 werden in dem gezeigten Ausführungsbeispiel mehrfach hintereinander von aufgrund der Relativbewegung unterschiedliche Flächenabschnitten, hier konkret von einem Deckel 9 bzw. Deckelabschnitten, insbesondere einer Deckelfolie der Portionseinheit 4 nacheinander mehrere, beispielhaft drei, mehrdimensionale Farbsignale erfasst, wobei hierzu innerhalb des Sensors mehrere analoge Signale in Form von elektrischen Spannungen erzeugt werden, die vorteilhafter Weise, jedoch nicht zwingend, bereits von dem ersten Farbsensor 5, bei dem es sich beispielsweise um einen RGB-Sensor handelt, in digitale Farbinformationen (Farbkoordinaten) umgewandelt werden.

Diese gelangen in die Steuerung 6. Aus den, beispielhaft drei, digitalen Farbinformationen wird dann durch Mittelwertbildung ein Gesamtfarbwert F_{G} erzeugt, der einer Raumkoordinate in einem Farbraum entspricht, wobei der Farbraum in Teilräume unterteilt ist und unterschiedliche Teilräume jeweils einem bestimmten Portionseinheitentyp zugeordnet sind. In Abhängigkeit des erkannten Portionseinheitentyps wird dann von der Steuerung 6 ein geeignetes Betriebsprogramm zum Betreiben von Funktionseinheiten der Blackbox 2 ausgewählt und ausgeführt, insbesondere indem einzelne der Funktionseinheiten entsprechend den Vorgaben des Programms angesteuert werden.

In Fig. 2 ist eine Draufsicht auf die Portionseinheit 4, genauer auf dessen Deckel 9 (Deckelfolie) gezeigt. Zu erkennen ist hier ein lediglich beispielhaft angegebenes Muster in Form eines sich wiederholenden, zeilenförmig angeordneten Schriftzuges, welches schwarz oder weiß auf farbigem Grund oder farbig auf schwarzem oder weißem Grund ausgebildet sein kann. Auch ist es möglich, dass der Hintergrund und der Schriftzug farbig ausgestaltet sind. Ebenfalls wird mittels des ersten Farbsensors 5 nacheinander von drei unterschiedlichen Flächenbereichen 10a, 10b, 10c während der Relativbewegung der Portionseinheit 4 relativ zu dem ersten Farbsensor 5 jeweils ein mehrdimensionales Farbsignal erzeugt. Grundsätzlich ist es alternativ möglich, nur ein einziges Farbsignal auf Basis eines einzigen Flächenabschnittes 10a, 10b oder 10c zu erzeugen. Auch ist es denkbar mindestens zwei Farbsignale gleichzeitig zu erzeugen, wobei in diesem Fall bevorzugt zwei nicht dargestellte Farbesensoren vorgesehen sind. Zudem ist es denkbar mit mindestens zwei Farbsensoren nacheinander Farbsignale von unterschiedlichen Bereichen zu erzeugen. Alternativ ist es denkbar, dass zwei Farbsensoren durch eine entsprechende Anordnung einen gemeinsamen Detektionsbereich aufweisen und dass von dem gleichen Detektionsbereich mindestens zwei Signale gleichzeitig oder nacheinander erzeugt werden.

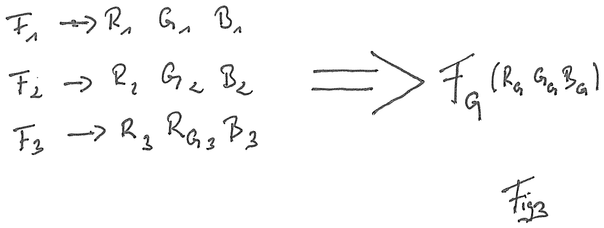

In Fig. 3 ist die Signalverarbeitung schematisch dargestellt. Zunächst werden mittels des ersten Farbsensors, hier beispielhaft intern nacheinander drei analoge, jeweils mehrdimensionale Farbsignale F1, F2, F3 erzeugt und jeweils noch innerhalb des Sensors in digitale Werte R₁, G₁, B₁ bzw. R₂, G₂, B₂ bzw. R₃, G₃, B₃ umgewandelt. Diese digitalen Farbwerte oder daraus abgeleitete Werte werden in der Steuerung, insbesondere durch Mittelwertbildung zu einem einzigen End- bzw. Mischfarbwert F_{G} gerichtet, welcher wiederum bevorzugt aus drei Farbwerten R_{G}, G_{G}, B_{G} besteht. Alternative Darstellungsformen in einem anderen Farbraum, beispielsweise in ein HSV-Farbraum sind alternativ möglich.

### Bezugszeichenliste

- 1: Getränkezubereitungsvorrichtung
- 2: Blackbox
- 3: Schacht
- 4: Portionseinheit
- 5: erster optischer Farbsensor
- 6: Steuerung
- 7: Beleuchtungsmittel
- 8: Sensor (Bewegungssensor)
- 9: Deckel
- 10a,b,c: unterschiedliche Erfassungsbereiche bzw. Flächen auf der Portionseinheit

- v: Geschwindigkeit der Portionseinheit relativ zum ersten Farbsensor
- F1,F2, F3: unterschiedliche, jeweils mehrdimensionale analoge Farbsignale
- R₁, G₁, B₁: mehrdimensionaler digitaler Farbwert
- R₂, G₂, B₂: mehrdimensionaler digitaler Farbwert
- R₃, G₃, B₃: mehrdimensionaler digitaler Farbwert
- F_{G}: Misch- bzw. Endfarbwert (mehrdimensional)

## Patentansprüche

1. Verfahren zum Betreiben einer zum Zubereiten von Getränken mittels Portionseinheiten (4), insbesondere Kapseln, ausgebildeten Getränkezubereitungsvorrichtung (1), wobei mittels eines optischen Farbsensors (5), insbesondere eines RGB-Sensors, von einer Portionseinheit (4) ein erstes, insbesondere mehrdimensionales, Farbsignal zur Identifikation eines Portionseinheitentyps erzeugt wird, wobei nach erfolgter Identifikation des Portionseinheitentyps auf Basis des Farbsignals, insbesondere auf Basis einer auf Basis des Farbsignals generierten digitalen Farbinformation, von einer Steuerung ein portionseinheitentypspezifisches Programm zum Betrieb der Getränkezubereitungsvorrichtung (1) ausgewählt und ausgeführt wird, wobei das erste Farbsignal während einer Bewegung der Portionseinheit (4) relativ zu dem Farbsensor (5) erfasst wird,
**dadurch gekennzeichnet,**
**dass** zusätzlich zu dem ersten Farbsignal gleichzeitig oder alternativ nacheinander, jeweils während der Relativbewegung, mindestens ein zweites, bevorzugt mehrdimensionales, Farbsignal von der Portionseinheit (4) auf Basis eines von einem dem ersten Farbsignal zugrundeliegenden ersten Flächenbereich der Portionseinheit (4), zumindest zum Teil, unterschiedlichen zweiten Flächenbereich der Portionseinheit (4) erzeugt wird, und dass das erste und mindestens das zweite Farbsignal einfließen, insbesondere durch Mittelwertbildung von auf Basis der Farbsignale generierten digitalen Farbinformationen, in die Generierung einer, insbesondere einzigen, den Portionseinheitentyp charakterisierenden Gesamtfarbe, der das portionsspezifische Programm zugeordnet ist.

2. Verfahren nach Anspruch 1 ,
**dadurch gekennzeichnet,**
**dass** der Farbsensor (5) getriggert wird mittels einem, vorzugsweise in einer Bewegungsrichtung der Portionseinheit (4) vor dem Farbsensor angeordneten, Sensor, insbesondere Bewegungssensor (8) oder dass das erste Farbsignal erzeugt wird, sobald der Farbsensor (5) eine Farbänderung und/oder Lichtintensitätsänderung detektiert.

3. Verfahren nach einem der Ansprüche 1 oder 2,
**dadurch gekennzeichnet,**
**dass** das zweite Farbsignal von demselben Farbsensor (5) wie das erste Farbsignal oder von einem fakultativen zweiten Farbsensor erzeugt wird.

4. Verfahren nach einem der vorhergehenden Ansprüche,
**dadurch gekennzeichnet,**
**dass** die Portionseinheit (4), insbesondere auf einer Deckelfolie, ein sich, vorzugsweise zeilenweise, wiederholendes Muster, insbesondere umfassend oder bestehend aus der Wiederholung eines Schriftzuges und/oder einer Zahlenfolge, aufweist, wobei der Schriftzug und/oder ein Hintergrund farbig gestaltet ist/sind.

5. Zum Zubereiten von Getränken mittels Portionseinheiten (4), insbesondere Kapseln, ausgebildete Getränkezubereitungsvorrichtung (1) unter Ausführung eines Verfahrens nach einem der vorhergehenden Ansprüche, mit einer Druckwassereinrichtung und mit einer Brüheinheit zum Zubereiten der Getränke, bevorzugt zum Brühen von Kaffeegetränken sowie mit Identifikationsmitteln zum Identifizieren eines Portionseinheitentyps, umfassend einen optischen Farbsensor (5), insbesondere einen RGB-Sensor, zum Erzeugen eines ersten, insbesondere mehrdimensionalen, Farbsignals von der Portionseinheit, wobei die Getränkezubereitungsvorrichtung (1) zum Auswählen und Ausführen eines portionseinheitenspezifisches Programm zum Betrieb der Getränkezubereitungsvorrichtung (1) eingerichtet ist, wobei dass die Identifikationsmittel ausgebildet und eingerichtet sind, das erste Farbsignal während einer Bewegung der Portionseinheit (4) relativ zu dem Farbsensor zu erzeugen,
**dadurch gekennzeichnet,**
**dass** die Identifikationsmittel ausgebildet und eingerichtet sind zusätzlich zu dem ersten Farbsignal ein zweites Farbsignal von der Portionseinheit auf Basis eines von einem dem ersten Farbsignal zugrunde liegenden ersten Farbbereich der Portionseinheit (4), zumindest zum Teil, unterschiedlichen zweiten Flächenbereich der Portionseinheit (4) zu erzeugen und unter Berücksichtigung des ersten und des zweiten Farbsignals den Portionseinheitentyp zu identifizieren.

6. Getränkezubereitungsvorrichtung nach Anspruch 5,
**dadurch gekennzeichnet,**
**dass** die Getränkezubereitungsvorrichtung (1) einen Schacht (3) aufweist, in welchem die Portionseinheit (4) entlang des feststehend angeordneten ersten Farbsensors zur Realisierung der Relativbewegung schwerkraftbedingt vorbei fallen kann.

7. Getränkezubereitungsvorrichtung nach einem der Ansprüche 5 oder 6,
**dadurch gekennzeichnet,**
**dass** die Getränkezubereitungsvorrichtung (1) einen Sensor (8), insbesondere einen Bewegungssensor, vorzugsweise eine Lichtschranke und/oder eine Reflektionslichtschranke und/oder oder eine Photodiode, zum Erfassen einer Portionseinheit (4), vorzugsweise zum Triggern des ersten Farbsensors (5) und/oder Beleuchtungsmittel zum Beleuchten der Portionseinheit (4) während der Relativbewegung aufweist.

8. System, umfassend eine Getränkezubereitungsvorrichtung (1) nach einem der Ansprüche 5 bis 7 sowie mindestens zwei jeweils eine Getränkesubstanz beinhaltende Portionseinheiten (4) unterschiedlichen Typs, die hinsichtlich ihrer Farbgebung derart unterscheiden, dass von dem ersten Farbsensor (8) der Getränkezubereitungsvorrichtung (1) unterschiedliche Farbsensorsignale resultieren.

## Claims

1. A method for operating a beverage preparation device (1) designed for preparing beverages by means of portion units (4), in particular capsules, a, in particular multidimensional, first color signal for identifying a type of portion unit being generated by a portion unit (4) by means of an optical color sensor (5), in particular an RGB sensor, a program for operating the beverage preparation device (1) being selected and carried out by a control after the completed identification of the portion unit type based on the color signal, in particular based on digital color information generated based on the color signal, said program being specific to the portion unit type, said first color signal being captured during a movement of the portion unit (4) relative to the color sensor (5),
**characterized in that**
in addition to the first color signal, at least a second, preferably multidimensional, color signal is generated by the portion unit (4) either¹ simultaneously or, alternatively, consecutively during the relative movement on the basis of a second surface area of the portion unit (4) which is, at least partially, different from the first surface area of the portion unit (4) based on the first color signal, and that the first and at least the second color signal flow into the generation of an, in particular only, overall color characterizing the portion unit type, in particular by average determination of digital color information generated on the basis of color signals, the portion-specific program being assigned to said overall color.

2. The method according to claim 1,
**characterized in that**
the color sensor (5) is triggered by a sensor, in particular by a motion sensor (8), preferably disposed in front of the color sensor in the movement direction of the portion unit (4), or that the first color signal is generated as soon as a change in color and/or light intensity is detected by the color sensor (5).

3. The method according to one of the claims 1 or 2,
**characterized in that**
the second color signal is generated by the same color sensor (5) as the first color signal or by a facultative second color sensor.

4. The method according to one of the previous claims,
**characterized in that**
the portion unit (4) has, in particular on the cover foil, a repetitive pattern, in particular repeated in every line and in particular comprising or consisting of the repetition of a sequence of letters and/or numbers, said sequence of letters and/or a background being designed in color.

5. A beverage preparation device (1) for preparing beverages by means of portion units (4), in particular capsules, by carrying out a method according to one of the previous claims, comprising a device for pressurizing water and a brewing unit for preparing the beverages, preferably for brewing coffee beverages, and comprising identification means for identifying a portion unit type, comprising an optical color sensor (5), in particular an RGB sensor, for generating a first, in particular multidimensional, color signal of the portion unit, said beverage preparation device (1) being configured for selecting and carrying out a program, which is specific to the portion unit type, for operating the beverage preparation device (1), said identification means being designed and configured for creating the first color signal during a movement of the portion unit (4) relative to the color sensor,
**characterized in that**
the identification means are designed and configured for generating a second color signal of the portion unit in addition to the first color signal, said second color signal being generated based on a second surface area of the portion unit (4), which is, at least partially, different from the first color area of the portion unit (4), on which the first color signal is based, and for identifying the portion unit type in consideration of the first and the second color signal.

6. The beverage preparation device according to claim 5,
**characterized in that**
the beverage preparation device (1) comprises a duct (3), in which the portion unit (4) is able to fall past along the first color sensor, which is disposed in a fixed position, due to gravity in order to realize the relative movement.

7. The beverage preparation device according to one of the claims 5 or 6,
**characterized in that**
the beverage preparation device (1) comprises a sensor (8), in particular a motion sensor, preferably a light barrier and/or a reflective barrier a photodiode, for capturing a portion unit (4), preferably for triggering the first color sensor (5), illumination means for illuminating the portion unit (4) during the relative movement.

8. A system, comprising a beverage preparation device (1) according to one of the claims 5 to 7 as well as at least two portion units (4) of a different type, each containing a beverage substance, said portion units (4) differing with regard to their coloring in such a manner that different color sensor signals result from the first color sensor (8) of the beverage preparation device (1).

## Revendications

1. Procédé pour le fonctionnement d'un dispositif de préparation de boissons (1) réalisé pour la préparation des boissons en utilisant des unités de portion (4), particulièrement des capsules, un premier signal de couleur, particulièrement à plusieurs dimensions, pour l'identification d'un type d'unité de portion étant produit par une unité de portion (4) en utilisant un capteur de couleur (5) optique, particulièrement un capteur RGB, un programme spécifique à l'unité de portion (4) pour le fonctionnement du dispositif de préparation des boissons (1) étant choisi et exécuté par une commande après l'identification réussie dédit type d'unité de portion à la base d'un signal de couleur, particulièrement à la base d'une information de couleur numérique générée à la base du signal de couleur, ledit premier signal de couleur étant capturé pendant un mouvement d'une unité de portion (4) relativement au capteur de couleur (5),
**caractérisé en ce que**
supplémentairement au premier signal de couleur, au moins un deuxième signal de couleur, particulièrement à plusieurs dimensions, est produit par l'unité de portion (4) soit¹ en même temps soit l'un après l'autre pendant le mouvement relatif à la base d'une deuxième zone de surface de l'unité de portion (4) qui se diffère de la première zone de surface de l'unité de portion (4), au moins en parties, à la base du premier signal de couleur, et que le premier et au moins le deuxième signal de couleur sont utilisés pour la génération d'une, particulièrement d'une seule, couleur entière qui caractérise le type d'unité de portion, particulièrement par la formation de moyenne des informations de couleur numériques générées à la base des signaux de couleurs, le programme spécifique à la portion étant associé à la couleur entière.

2. Procédé selon la revendication 1,
**caractérisé en ce que**
le capteur de couleur (5) est déclenché par un capteur, particulièrement un capteur de mouvement (8), de préférence disposé avant le capteur de couleur dans une direction de mouvement de l'unité de portion (4) ou que le premier signal de couleur est produit dès que le capteur de couleur (5) détecte un changement de couleur et/ou un changement de l'intensité de lumière.

3. Procédé selon l'une quelconque des revendications 1 ou 2,
**caractérisé en ce que**
le deuxième signal de couleur est produit par le même capteur de couleur (5) comme le premier signal de couleur ou d'un deuxième capteur de couleur facultatif.

4. Procédé selon l'une quelconque des revendications précédentes,
**caractérisé en ce que**
l'unité de portion (4), particulièrement sur une feuille-couvercle, comprend un motif qui se répète, de préférence par lignes, particulièrement comprenant ou se constituant d'une répétition d'un paraphe et/ou d'une série de nombres, ledit paraphe et/ou un arrière-plan étant formé(s) coloré(s).

5. Dispositif de préparation de boissons (1) réalisé pour la préparation de boissons en utilisant des unités de portion (4), particulièrement des capsules, sous l'exécution d'un procédé selon l'une quelconque des revendications précédentes, ayant un dispositif d'eau pressurisée et ayant un système d'infusion pour la préparation de boissons, de préférence pour échauder de boissons à café, de même qu'ayant des moyens d'identification pour identifier un type d'unité de portion, comprenant un capteur de couleur (5) optique, particulièrement un capteur RGB, pour produire un premier signal de couleur de l'unité de portion, de préférence à plusieurs dimensions, ledit dispositif de préparation de boissons (1) étant configuré pour choisir et exécuter un programme, qui est spécifique aux unités de portions, pour le fonctionnement du dispositif de préparation de boissons (1), lesdits moyens d'identification étant réalisés et configurés pour générer le premier signal de couleur pendant un mouvement de l'unité de portion (4) relativement au capteur de couleur,
**caractérisé en ce que**
les moyens d'identification sont réalisés et configurés pour générer supplémentairement au premier signal de couleur un deuxième signal de couleur de l'unité de portion à la base d'une deuxième zone de surface² de l'unité de portion (4) qui est différente, au moins en partie, d'une zone de couleur de l'unité de portion (4) sur lequel le premier signal de couleur s'appuie et pour identifier le type d'unité de portion sous prise en considération le premier et le deuxième signal de couleur.

6. Dispositif de préparation de boissons selon la revendication 5,
**caractérisé en ce que**
le dispositif de préparation de boisson (1) comprend un conduit (3), dans laquelle l'unité de portion (4) peut tomber devant due à la force de gravité le long du premier capteur de couleur, qui est disposé de manière fixe, pour la réalisation de mouvement relatif.

7. Dispositif de préparation de boissons selon l'une quelconque des revendications 5 ou 6,
**caractérisé en ce que**
le dispositif de préparation de boisson (1) comprend un capteur (8), particulièrement un capteur de mouvement, de préférence un barrage lumineux et/ou une barrière lumineuse à réflexion et/ou une photodiode pour détecter une unité de portion (4), de préférence pour déclencher le premier capteur de couleur (5), et/ou des moyens d'éclairage pour éclairer l'unité de portion (4) pendant le mouvement relatif.

8. Système, comprenant un dispositif de préparation de boisson (1) selon les revendications 5 à 7 de même qu'au moins deux unités de portion (4) de type différent, comprenant toutes les deux une substance de boisson, lesdites unités de portion (4) se différenciant par rapport aux couleurs de telle manière que des signaux de couleurs différents proviennent du premier capteur de couleur (8) du dispositif de préparation de boisson (1).
